# EUROPEAN PATENT APPLICATION

(11) **EP 3 495 236 A1**
(43) Date of publication of application: **12.06.2019**
(21) Application number: 18210024.8
(22) Date of filing: 04.12.2018
(51) Int. Cl.: B62D 5/04, F16H 25/22

(54) **STEERING SYSTEM**

(30) Priority: 05.12.2017 JP 2017233378
(71) Applicant: JTEKT CORPORATION, Osaka 542-8502 (JP)
(72) Inventor: OGATA, Toshiaki, Osaka-shi, Osaka 542-8502 (JP)
(74) Representative: Winter, Brandl, Fürniss, Hübner, Röss, Kaiser, Polte - Partnerschaft mbB

(57) **Abstract**

There is provided a steering system that includes a ball screw device in which ball clearance reduction of rolling elements is not likely to occur in the case where the steering angle of a steering wheel is in the neutral state. A steering system (10) includes a steered shaft (20), a ball screw device (40), a motor (M), and a drive force transfer mechanism (32). The position of a housing (11) relative to the steered shaft (20) with a vehicle in the straight travel state is defined as a steering neutral position (N) of the steered shaft (20).
A deflector passage (61) is formed such that respective end portions (61a and 62a) thereof, which are connected to a rolling path (Rl), are in a semiperimeter range (Arl) of the inner peripheral surface of a rolling element nut (21) with the steered shaft (20) at the steering neutral position (N). The range (Arl) is formed to extend to a phase of 90° on both sides in the circumferential direction of the inner peripheral surface from a crossing line (LI) that is the farther from a drive pulley (36), of crossing lines formed with a virtual plane (Q) that includes respective rotational axes (C1 and C2) of a driven pulley (34) and the drive pulley (36) intersecting the rolling element nut (21).

## Description

### BACKGROUND OF THE INVENTION

### 1. Field of the Invention

The present invention relates to a steering system.

### 2. Description of the Related Art

There has hitherto been a steering system for an automobile, in which operation of a steered shaft (rack shaft) is assisted by generating thrust in the axial direction of the steered shaft by actuating a ball screw device using a motor (see Japanese Patent Application Publication No. 2011-256901 (JP 2011-256901 A) and Japanese Patent Application Publication No. 2014-77459 (JP 2014-77459 A), for example). In the ball screw device according to JP 2011-256901 A and JP 2014-77459 A, a rolling path for rolling elements is formed with an outer peripheral rolling groove, which is formed in the outer peripheral surface of the steered shaft, and an inner peripheral rolling groove, which is formed in the inner peripheral surface of a rolling element nut (ball nut), facing each other. In addition, the ball screw device includes a deflector (circulation member) that connects a passage formed therein to the rolling path to form an endless circulation path to allow endless circulation of the rolling elements.

In such a ball screw device, normally, adjacent rolling elements are arranged with a predetermined clearance therebetween in the rolling path. Therefore, when the rolling element nut (inner peripheral rolling groove) is rotated about the axis relative to the steered shaft (outer peripheral rolling groove), the plurality of rolling elements in the rolling path are rolled in the same direction at the same speed while contacting each of the inner peripheral rolling groove surface and the outer peripheral rolling groove surface without contacting adjacent rolling elements, achieving smooth relative rotation with low resistance between the inner peripheral rolling groove and the outer peripheral rolling groove.

In the case where the vehicle is in the straight travel state, that is, the steering angle of the steering shaft is in the so-called neutral state, in the steering system described above, however, there may occur a phenomenon called ball clearance reduction in which the clearance between the plurality of rolling elements in the rolling path is reduced and adjacent rolling elements contact each other.

When the ball clearance reduction state is caused, the rolling elements which contact each other in the rolling path are rotated in the same direction when the rolling element nut is relatively rotated. Therefore, movement (rotation) in opposite directions is caused at a portion at which the rolling elements contact each other, generating friction. Consequently, a force required for steering is increased, and the driver may feel that the steering torque for a steering wheel has been increased. When the steering system is in the neutral state, the driver often performs a steering operation for a very small steering angle in order to keep the lane or the like, and therefore the driver tends to sense magnitude of steering torque and fluctuations in steering torque. Meanwhile, a load on an electric motor that rotates the rolling element nut may be increased and power consumption or the like may also be increased.

In particular, the rack-parallel steering system described in JP 2014-77459 A includes a drive pulley fixed to the distal end of an output shaft of a motor, a driven pulley fixed to the outer peripheral surface of a rolling element nut, and a belt wound between the drive pulley and the driven pulley with predetermined tension. With such a configuration, the rolling element nut (driven pulley) is pulled toward the drive pulley by the tension of the belt.

Therefore, the width (clearance) in the radial direction of a space (rolling path) between the inner peripheral rolling groove of the rolling element nut and the outer peripheral rolling groove of the steered shaft becomes non-uniform in the circumferential direction, and the rolling path has a portion with a small clearance and a portion with a large clearance. Consequently, when the rolling element nut is relatively rotated, the plurality of rolling elements in the rolling path tend to be pushed out from the portion of the passage with a small clearance toward the portion of the passage with a large clearance. Then, the plurality of rolling elements which have been pushed out are moved from the portion of the passage with a small clearance to the portion of the passage with a large clearance to be gathered, promoting the ball clearance reduction state in which adjacent rolling elements contact each other.

### SUMMARY OF THE INVENTION

It is an object of the present invention to provide a rack-parallel steering system that includes a ball screw device in which ball clearance reduction of rolling elements is not likely to occur in the case where the steering angle of a steering wheel is in the neutral state.

An aspect of the present invention provides a steering system for a vehicle, including: a steered shaft supported on a housing so as to be movable in an axial direction and moved in the axial direction in accordance with a steering angle of a steering wheel to steer steered wheels; a ball screw device that includes an outer peripheral rolling groove formed in an outer peripheral surface of the steered shaft, a rolling element nut, in an inner peripheral surface of which an inner peripheral rolling groove corresponding to the outer peripheral rolling groove is formed to form a rolling path wound spirally a plurality of times between the inner peripheral rolling groove and the outer peripheral rolling groove, a plurality of rolling elements housed in the rolling path, and a deflector portion in which a deflector passage is formed, the deflector passage being provided in the rolling element nut and communicating with the rolling path such that a first opening and a second opening that form respective ends of the rolling path are connected to form an endless circulation path together with the rolling path, enabling endless circulation of the rolling elements in the circulation path; a motor that is fixed to the housing and that includes an output shaft offset from the steered shaft; and a drive force transfer mechanism that includes a drive pulley provided so as to be rotatable together with the output shaft, a driven pulley provided so as to be rotatable together with the rolling element nut, and a belt wound between the drive pulley and the driven pulley with tension to transfer a rotational drive force of the motor.

A position of the housing relative to the steered shaft with the vehicle in a straight travel state is defined as a steering neutral position of the steered shaft. The deflector passage is formed such that respective end portions of the deflector passage, which are connected to the first opening and the second opening of the rolling path, are in a semiperimeter range of the inner peripheral surface of the rolling element nut with the steered shaft at the steering neutral position. The semiperimeter range is a range formed to extend to a phase of 90° on both sides in a circumferential direction of the inner peripheral surface of the rolling element nut from a crossing line that is the farther from the drive pulley, of crossing lines formed with a virtual plane that includes a rotational axis of the driven pulley and a rotational axis of the drive pulley intersecting the inner peripheral surface.

In this manner, the clearance between the inner peripheral rolling groove of the rolling element nut and the outer peripheral rolling groove is non-uniform in the circumferential direction with the driven pulley and the rolling element nut pulled toward the drive pulley by the tension of the belt, and both end portions of the deflector passage are disposed in the (semiperimeter) range on the side with a small clearance. In this event, the deflector passage is not affected by the size of the clearance between the inner peripheral rolling groove and the outer peripheral rolling groove, and always has a constant diameter. Therefore, the range in which the clearance is substantially small, in the range on the side with a small clearance, can be reduced by an amount corresponding to the range between both end portions of the deflector passage.

Thus, the number of rolling elements between the inner peripheral rolling groove and the outer peripheral rolling groove to be pushed out from the portion on the side with a small clearance toward the portion on the side with a large clearance can be suppressed effectively. In addition, the rolling elements are easily movable from the portion on the side with a large clearance toward the portion on the side with a small clearance. Thus, in the case where the portion on the side with a large clearance is congested with the rolling elements, such congestion can be relaxed effectively. Therefore, occurrence of ball clearance reduction of the rolling elements is suppressed even if the rolling element nut is relatively rotated with the driver operating the steering wheel in the case where the steering angle of the steering wheel is in the neutral state. Consequently, an increase in steering torque required for steering can be suppressed, and there is little possibility that the driver feels that the steering torque has been increased. There is also little possibility that a load on the electric motor which rotates the rolling element nut is increased and power consumption is increased.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating the entire electric power steering system according to the present embodiment;
FIG. 2 is an enlarged sectional view of a steering assist mechanism and a ball screw device in FIG. 1;
FIG. 3 is a sectional view taken along the line III-III in FIG. 2, illustrating a drive force transfer mechanism;
FIG. 4 illustrates a rolling element nut in FIG. 2 as seen from above;
FIG. 5 is a sectional view taken along the line V-V in FIG. 4;
FIG. 6 is a perspective view of a deflector;
FIG. 7 is a schematic diagram of a circulation path;
FIG. 8 is a transparent view of a deflector passage as seen in the axial direction;
FIG. 9 is a transparent view of the deflector passage in FIG. 3, illustrating the deflector passage as being symmetrical in the right-left direction as seen in the axial direction;
FIG. 10 illustrates the related art corresponding to FIG. 3;
FIG. 11 illustrates an embodiment according to a first modification; and
FIG. 12 illustrates an embodiment according to a second modification.

### DETAILED DESCRIPTION OF EMBODIMENTS

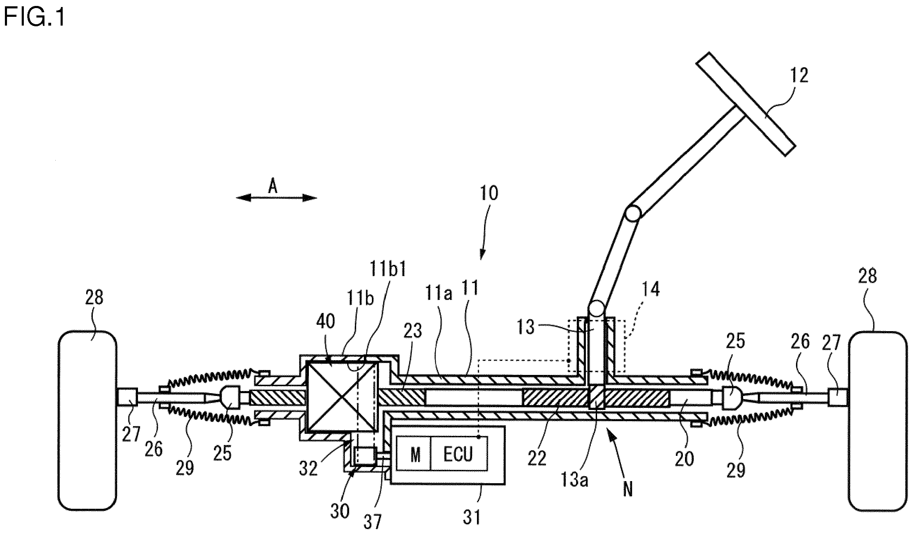

An embodiment of the present invention will be described below with reference to the drawings. FIG. 1 illustrates the entire electric power steering system (corresponding to the steering system) for a vehicle according to the present invention. The electric power steering system is a steering system that supplements a steering force with a steering assist force.

An electric power steering system 10 (hereinafter referred to simply as a "steering system 10") is a device that steers steered wheels 28 and 28 of a vehicle by reciprocally moving a steered shaft 20 coupled to the steered wheels 28 and 28 in the A direction (right-left direction in FIG. 1) which coincides with the axial direction of the steered shaft 20. The steering state of the steered wheels 28 and 28 in FIG. 1 corresponds to a state in which the vehicle travels straight, that is, a neutral steering state.

As illustrated in FIG. 1, the steering system 10 includes a housing 11, a steering wheel 12, a steering shaft 13, a torque detection device 14, an electric motor M (corresponding to the "motor"; hereinafter referred to simply as a "motor M"), the steered shaft 20 discussed earlier, a steering assist mechanism 30, and a ball screw device 40.

The housing 11 is a fixed member fixed to the vehicle. The housing 11 is formed in a tubular shape, and includes a first housing 11a and a second housing 11b fixed to one end side (left side in FIG. 1) of the first housing 11a in the A direction.

The steering wheel 12 is fixed to an end portion of the steering shaft 13, and rotatably supported in a cabin. The steering shaft 13 transfers torque applied to the steering wheel 12 by an operation by a driver to the steered shaft 20.

A pinion 13a that constitutes a rack-and-pinion mechanism is formed at an end portion of the steering shaft 13 on the steered shaft 20 side. The torque detection device 14 detects torque applied to the steering shaft 13 on the basis of the amount of torsion of the steering shaft 13.

The steered shaft 20 extends in the A direction. The steered shaft 20 is supported on the housing 11 so as to be reciprocally movable in the axial direction. Rack teeth 22 are formed on a part of the outer peripheral surface of the steered shaft 20. The rack teeth 22 are meshed with the pinion 13a of the steering shaft 13, and constitute the rack-and-pinion mechanism together with the pinion 13a.

The relative position of meshing between the pinion 13a and the rack teeth 22 of the rack-and-pinion mechanism in the neutral steering state (corresponding to the straight travel state of the vehicle) illustrated in FIG. 1 is defined as a "steering neutral position N" of the rack-and-pinion mechanism. In addition, the position of the steered shaft 20 relative to the housing 11 in the neutral steering state is defined as the steering neutral position N of the steered shaft 20. The steering neutral position N will be used in the following description. For the rack-and-pinion mechanism, the maximum axial force that can be transferred between the steering shaft 13 and the steered shaft 20 can be set on the basis of usage of the steering system 10 etc.

The steered shaft 20 has joints 25 and 25 at both end portions. Tie rods 26 and 26 are coupled to respective end portions of the joints 25 and 25. The distal ends of the tie rods 26 and 26 are coupled to the right and left steered wheels 28 and 28 via knuckle arms 27 and 27, respectively.

Consequently, when the steering wheel 12 is operated, the steered shaft 20 is linearly reciprocally moved in the A direction via the rack-and-pinion mechanism in accordance with the steering angle of the steering shaft 13 which is coupled to the steering wheel 12. When this movement along the A direction is transferred to the knuckle arms 27 and 27 via the tie rods 26 and 26, the steered wheels 28 and 28 which have been in the neutral steering state (see FIG. 1) are steered to change the travel direction of the vehicle by a desired amount. The present invention is also applicable to a steering actuator in a steer-by-wire (SBW) device in which a steering wheel and a steered shaft are not mechanically coupled to each other. The steering actuator has a structure obtained by removing the pinion 13a and the rack teeth 22 from the steering system described above, for example.

First end portions of boots 29 and 29 are fixed to both ends of the housing 11 in the A direction. The boots 29 and 29 are made of a resin, for example, and each have a tubular bellows portion that mainly covers a joint portion between the joint 25, 25 and the tie rod 26, 26 and that is expandable in the A direction. Second end portions of the boots 29 and 29 are fixed to the tie rods 26 and 26. The boots 29 and 29 restrict entry of foreign matter such as dust and water into the housing 11 and the joints 25 and 25.

An outer peripheral rolling groove 23 is formed in the outer peripheral surface of the steered shaft 20 at a position that is different from that of the rack teeth 22.

The outer peripheral rolling groove 23 constitutes the ball screw device 40 together with an inner peripheral rolling groove 21a of a rolling element nut 21 to be discussed later. The steering assist mechanism 30 transfers a steering assist force to the outer peripheral rolling groove 23.

The steering assist mechanism 30 is a mechanism that applies a steering assist force to the steered shaft 20 using the motor M as a drive source. The steering assist mechanism 30 includes the motor M, a control unit ECU that drives the motor M, and a drive force transfer mechanism 32. The motor M and the control unit ECU which drives the motor M are housed in a case 31 fixed to the first housing 11a of the housing 11. The control unit ECU decides steering assist torque and controls an output of the motor M on the basis of a signal output from the torque detection device 14.

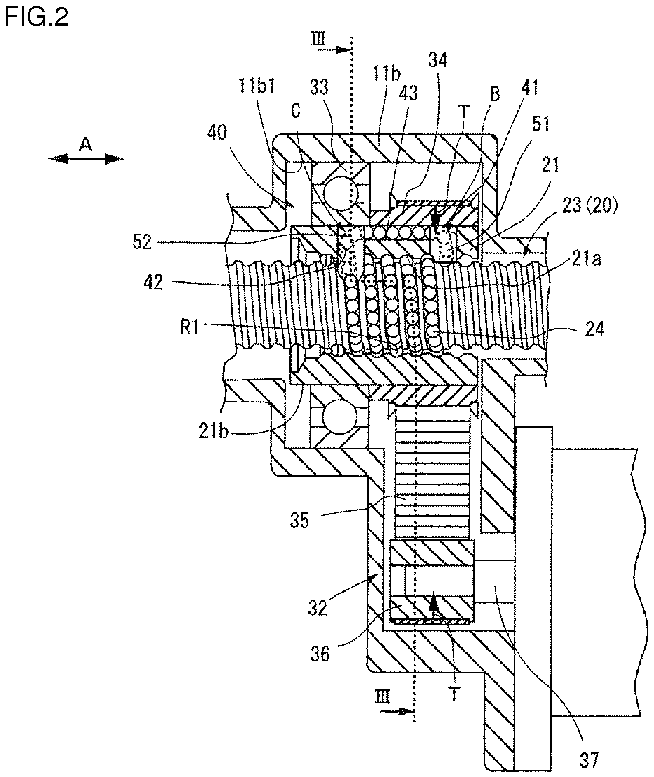

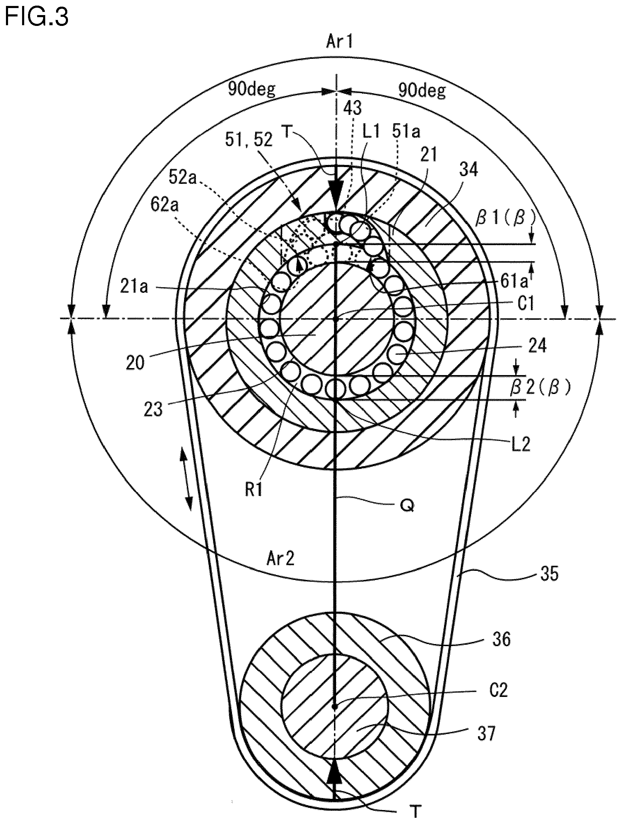

As illustrated in FIGS. 2 and 3, the drive force transfer mechanism 32 includes a drive pulley 36, a driven pulley 34, and a toothed belt 35. The drive pulley 36 is fixed to the distal end of an output shaft 37 of the motor M so as to be rotatable together therewith. The output shaft 37 is disposed in parallel with the axis of the steered shaft 20. The driven pulley 34 is fixed to the outer peripheral side of the rolling element nut 21 so as to be rotatable together therewith.

As illustrated in FIG. 2, the one end side (left side in FIG. 2) of the rolling element nut 21 in the A direction is rotatably supported on an inner peripheral surface 11b1 of the second housing 11b via a ball bearing 33. As illustrated in FIGS. 2 and 3, the belt 35 is wound between the drive pulley 36 and the driven pulley 34 with predetermined tension T. The drive force transfer mechanism 32 transfers a rotational drive force generated by the motor M between the drive pulley 36 and the driven pulley 34 via the belt 35.

With the configuration described above, the steering assist mechanism 30 drives the motor M in accordance with a turning operation of the steering wheel 12, and rotates the output shaft 37 of the motor M and the drive pulley 36. Rotation of the drive pulley 36 is transferred to the driven pulley 34 via the belt 35 to rotate the rolling element nut 21 which is provided integrally with the driven pulley 34. When the rolling element nut 21 is rotated, a steering assist force (power) in the axial direction of the steered shaft 20 is transferred to the steered shaft 20 via a plurality of rolling balls 24 (corresponding to the rolling elements) of the ball screw device 40, moving the steered shaft 20 in the axial direction.

The ball screw device 40 will be described in detail. As illustrated in FIG. 2, the ball screw device 40 is mainly housed in the second housing 11b. The ball screw device 40 includes the outer peripheral rolling groove 23 which is formed spirally in a part of the outer peripheral surface of the steered shaft 20 discussed earlier, the rolling element nut 21, the plurality of rolling balls 24, and a pair of deflectors 51 and 52.

The rolling element nut 21 is formed in a tubular shape. The inner peripheral rolling groove 21a in a spiral shape is formed in the inner peripheral surface of the rolling element nut 21. The inner peripheral rolling groove 21a (rolling element nut 21) is disposed coaxially with the outer peripheral rolling groove 23 (steered shaft 20) and circumferentially outward from the outer peripheral rolling groove 23. Consequently, the inner peripheral rolling groove 21a forms a rolling path R1 wound spirally a plurality of times together with the corresponding outer peripheral rolling groove 23. The plurality of rolling balls 24 are disposed in the rolling path R1.

The rolling element nut 21 includes a pair of (two) attachment holes 41 and 42 that penetrate the rolling element nut 21 between the inner peripheral rolling groove 21a and an outer peripheral surface 21b at two different locations (B position and C position in FIGS. 2 and 3) including both ends of the rolling path R1 which is formed to be wound a plurality of times between the inner peripheral rolling groove 21a and the outer peripheral rolling groove 23 which face each other (see FIGS. 2 to 5). The present invention is not limited to the aspect described above, and the attachment holes 41 and 42 may be formed to penetrate the rolling element nut 21 between the outer peripheral surface 21b and the inner peripheral rolling groove 21a at positions other than the B position and the C position as long as the attachment holes 41 and 42 are disposed with a plurality of turns of the inner peripheral rolling groove 21a provided therebetween.

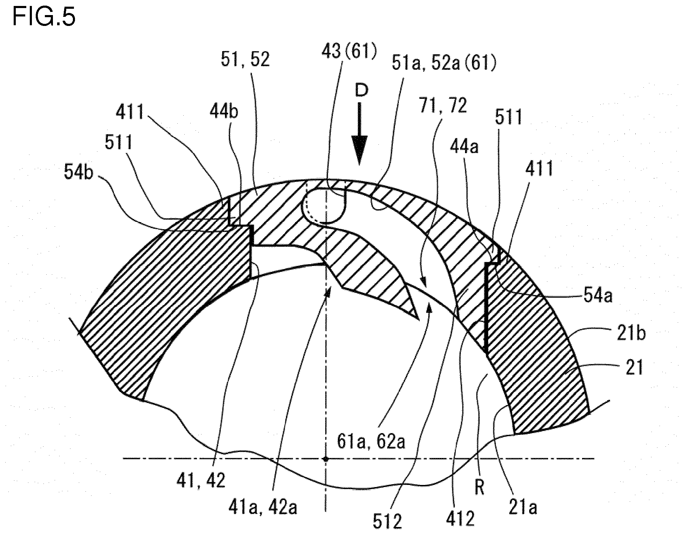

With the attachment holes 41 and 42 penetrating the rolling element nut 21, two opening portions 41a and 42a open in the inner peripheral rolling groove 21a (see FIG. 5). The pair of attachment holes 41 and 42 have the same configuration, and are disposed in the same arrangement when seen in the opposing axial directions. Thus, only the attachment hole 41 will be described below except when it is necessary to describe the attachment hole 42. The D direction indicated by the arrow in FIG. 5 indicates the direction of insertion of the deflector 51 into the attachment hole 41 (hereinafter referred to simply as an "insertion direction D").

FIGS. 2 and 3 illustrate a case where both the relative position of the rack-and-pinion mechanism and the relative position of the steered shaft 20 discussed above are the steering neutral position N. That is, FIGS. 2 and 3 are each a sectional view illustrating the state of arrangement of the drive pulley 36, the rolling element nut 21 (driven pulley 34), and the deflector 51 (deflector passage 61) with the vehicle in the straight travel state.

As illustrated in FIG. 5, the attachment hole 41 (42) includes a press-fitting hole portion 411, a guide hole portion 412, and a pair of stopping surfaces 44a and 44b. An outer peripheral portion 511 of the deflector 51 to be discussed later is housed in and press-fitted into the press-fitting hole portion 411. An inner peripheral portion 512 of the deflector 51 to be discussed later is housed in the guide hole portion 412. The pair of stopping surfaces 44a and 44b contact a pair of stopped surfaces 54a and 54b of the deflector 51 to be discussed later to position the deflector 51 in the insertion direction D.

The press-fitting hole portion 411 is formed on the outer peripheral surface 21b side of the rolling element nut 21 in the radial direction of the rolling element nut 21. The press-fitting hole portion 411 is formed such that the sectional shape on a plane that is orthogonal to the insertion direction D of the deflector 51 is a generally rectangular hole (not illustrated) with rounded corners.

In the present embodiment, the longitudinal direction of the generally rectangular shape in the section of the press-fitting hole portion 411 is not a direction that is parallel to an end surface of the rolling element nut 21, that is, not a direction that is orthogonal to the axis of the rolling element nut 21. In the present embodiment, the longitudinal direction of the press-fitting hole portion 411 is a direction that is substantially parallel to the direction of extension of a projected groove formed when the inner peripheral rolling groove 21a, which is formed in the inner peripheral surface of the rolling element nut 21, is enlarged and projected outward in the radial direction onto the outer peripheral surface 21b.

The guide hole portion 412 penetrates the rolling element nut 21 to open in the inner peripheral surface (inner peripheral rolling groove 21a) thereof. The guide hole portion 412 is formed such that the sectional shape on a plane that is orthogonal to the insertion direction D of the deflector 51 is a generally rectangular hole (not illustrated) with rounded corners. As illustrated in FIG. 5, the pair of stopping surfaces 44a and 44b are formed on different planes. It should be noted, however, that the pair of stopping surfaces 44a and 44b may be formed on the same plane.

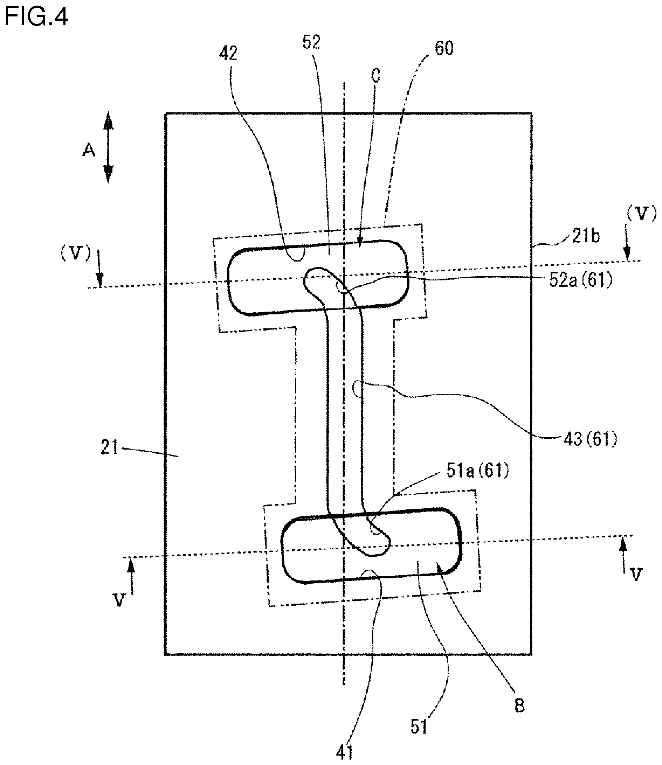

As illustrated in FIG. 4, a center passage 43 that connects and communicates between the pair of attachment holes 41 and 42 is formed in the outer peripheral surface 21b of the rolling element nut 21. The center passage 43 extends in parallel with the axial direction (A direction) of the rolling element nut 21, and opens outward in the radial direction of the rolling element nut 21. The opening width of the center passage 43 is slightly larger than the diameter of the rolling balls 24. In addition, the bottom surface of the center passage 43 is a curved surface formed with a radius that is slightly larger than the radius of the rolling balls 24. Consequently, the rolling balls 24 are freely reciprocally rollable in the center passage 43.

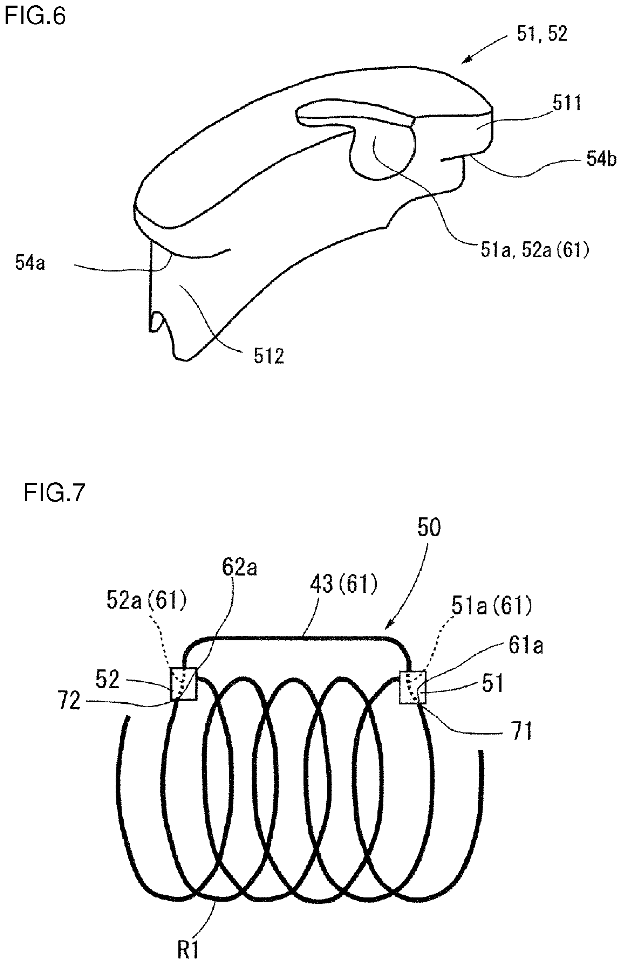

Next, the deflectors 51 and 52 will be described. FIG. 6 is a perspective view of the deflectors 51 and 52 to be housed in the attachment holes 41 and 42, respectively. As illustrated in FIGS. 2 to 5, the deflectors 51 and 52 are fixed as being housed in the attachment holes 41 and 42, respectively.

The deflectors 51 and 52 have a first passage 51a and a second passage 52a, respectively, formed therein as through holes. First end portions of the first passage 51a and the second passage 52a are connected to respective end portions of the center passage 43 illustrated in FIG. 4 with the deflectors 51 and 52 housed in the attachment holes 41 and 42, respectively. Meanwhile, second end portions of the first passage 51a and the second passage 52a are connected to the rolling path R1 to open in the rolling path R1. The deflector passage 61 is formed from the first passage 51a, the center passage 43, and the second passage 52a.

The openings (second end portions corresponding to both end portions of the deflector passage 61) of the first passage 51a and the second passage 52a also serve as openings at both ends of the rolling path R1. The openings at both ends of the rolling path R1 are defined as a first opening 71 and a second opening 72 (see FIG. 5). The first opening 71 and the second opening 72 open in the opening portions 41a and 42a of the attachment holes 41 and 42, respectively.

A deflector portion 60 (indicated by the long dashed double-short dashed line in FIG. 4) is constituted in the rolling element nut 21 by the pair of deflectors 51 and 52 and a part of the rolling element nut 21, which are provided with the deflector passage 61. As illustrated in the schematic diagram in FIG. 7, the deflector passage 61 forms an endless circulation path 50 together with the rolling path R1 by connecting the first opening 71 and the second opening 72 in the rolling path R1. Consequently, endless circulation of the rolling balls 24 (rolling elements) in the circulation path 50 is enabled. Endless circulation of the rolling balls 24 through the deflectors 51 and 52 is known, and thus is not described in detail.

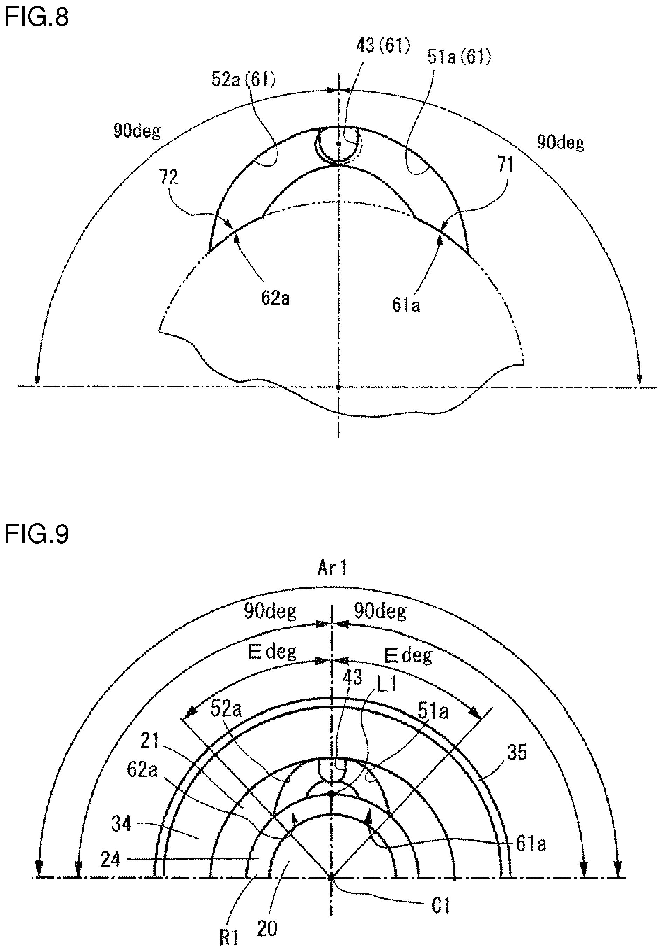

The first passage 51a and the second passage 52a, which extend from an end portion of the center passage 43 to an opening in the rolling path R1, are formed as being connected with a plurality of radii R as illustrated in FIG. 8 which is a transparent view of the deflector passage 61 as seen in the axial direction of the rolling element nut 21. It should be noted, however, that the present invention is not limited to this aspect, and the deflector passage 61 may be formed in any shape.

Particularly, at the steering neutral position N, the deflector passage 61 is formed such that both end portions 61a and 62a thereof, which are respectively connected to the first opening 71 and the second opening 72 of the rolling path R1, are in a semiperimeter range Ar1 (see FIGS. 3 and 8) of the inner peripheral surface (inner peripheral rolling groove 21a) of the rolling element nut 21. The semiperimeter range Ar1 is formed to extend to a phase of 90° on both sides in the circumferential direction of the inner peripheral surface (inner peripheral rolling groove 21a) of the rolling element nut 21 from a crossing line L1 that is the farther from the drive pulley 36, of crossing lines L1 and L2 formed with a virtual plane Q that includes rotational axes C1 and C2 of the driven pulley 34 and the drive pulley 36, intersecting the inner peripheral surface (inner peripheral rolling groove 21a). In FIGS. 3 and 8, the virtual plane Q is illustrated as being parallel to the up-down direction of the paper surface. However, this is based on the convenience of illustration, and does not mean that the virtual plane Q is parallel to the vertical direction. That is, the virtual plane Q may be tilted by any degree with respect to the vertical plane or the horizontal plane.

In other words, the semiperimeter range Ar1 is a semiperimeter range centered on a portion of the rolling path R1 with a clearance β1, which is smallest of a clearance β (distance) of the rolling path R1 between the inner peripheral rolling groove 21a and the outer peripheral rolling groove 23 which is non-uniform. The non-uniform clearance β of the rolling path R1 is caused with the driven pulley 34 and the rolling element nut 21 pulled toward the drive pulley 36 by the tension T of the belt 35. Thus, the clearance β of the rolling path R1 is smallest at the clearance β1 at the position of the crossing line L1.

In addition, as illustrated in FIG. 9, at the steering neutral position N, both end portions 61a and 62a of the deflector passage 61 are disposed at positions that are symmetrical in the right-left direction in the circumferential direction with respect to the crossing line L1 that is the farther from the drive pulley 36, that is, at positions away from the crossing line L1 by E degrees on both sides in the circumferential direction, when the rolling element nut 21 is seen in the axial direction.

At the steering neutral position N, in order to reliably disposed both end portions 61a and 62a of the deflector passage 61 at the desired positions described above, the phase of the start point of the inner peripheral rolling groove 21a, which is formed in the inner peripheral surface of the rolling element nut 21, in the circumferential direction and the phase of the start point of the outer peripheral rolling groove 23, which is formed in the outer peripheral surface of the steered shaft 20, in the circumferential direction may be set in association with the steering neutral position N.

For example, assuming that the axial positions of the steered shaft 20 and the rolling element nut 21 with respect to the housing 11 at the steering neutral position N are fixed, the phase of the start point of the inner peripheral rolling groove 21a of the rolling element nut 21 can be adjusted by displacing the axial position of the outer peripheral rolling groove 23 with respect to the steered shaft 20. That is, the phase of the inner peripheral rolling groove 21a can be shifted by 360/n degrees by shifting the axial position of the outer peripheral rolling groove 23 by 1/n of a lead L.

Next, the effect of the embodiment described above will be described. It is assumed, as a precondition, that the vehicle is traveling in the straight travel state. That is, it is assumed that the driver is driving with the steering angle of the steering wheel 12 (steering shaft 13) maintained in the neutral state. Hence, the rack-and-pinion mechanism and the steered shaft 20 are in the steering neutral position N.

At the start of operation, as illustrated in FIGS. 3 and 9, the plurality of rolling balls 24 are disposed in the rolling path R1 as arranged with a predetermined clearance therebetween. In this event, the rolling element nut 21 (driven pulley 34) is pulled toward the drive pulley 36 by the tension T of the belt 35. Consequently, the clearance β (distance) between the inner peripheral rolling groove 21a of the rolling element nut 21 and the outer peripheral rolling groove 23 of the steered shaft 20 is non-uniform in the circumferential direction.

That is, as illustrated in FIGS. 3 and 9, the range Ar1 with a small clearance β (portion on the side starting at (centered on) the crossing line L1) and a range Ar2 with a large clearance β (portion on the side centered on the crossing line L2) are provided in the rolling path R1. In such a state, the driver operates the steering wheel 12 (and the steering shaft 13) in order to keep the lane or adapt to the road surface condition or the like while driving the vehicle straight. Accordingly, the rolling balls 24 are rolled in the rolling path R1.

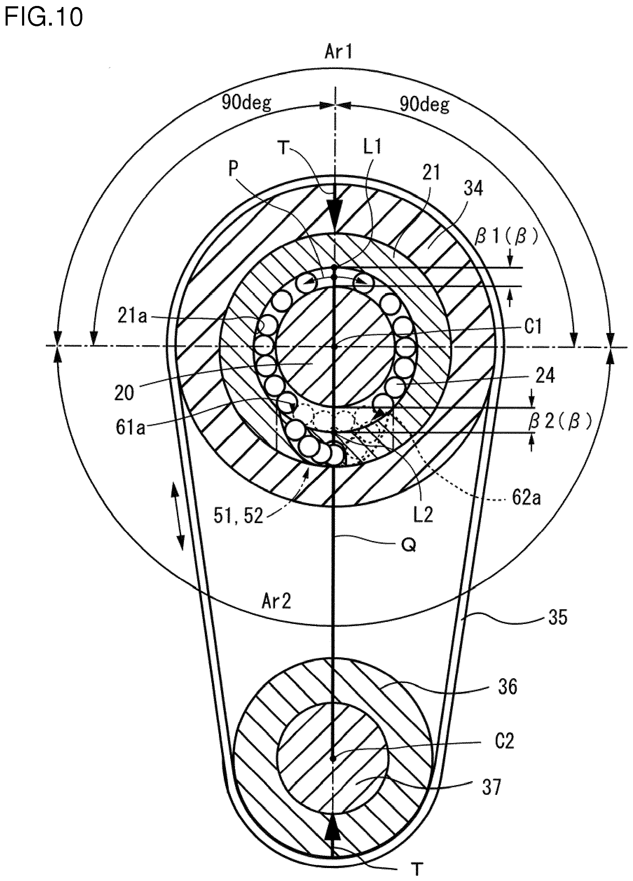

In this event, when the steering angle is in the neutral state in the normal steering system according to the related art, the positions of the deflector passage 61 and both end portions 61a and 62a with respect to the steered shaft 20 are determined by circumstances, and are not definite. Therefore, both end portions 61a and 62a of the deflector passage 61 are occasionally disposed in the range Ar2 with a large clearance β (see FIG. 10). In this case, many of the plurality of rolling balls 24 (rolling elements) which have been arranged in a portion of the rolling path R1 with a small clearance β are pushed out toward a portion of the rolling path R1 in the range Ar2 with a large clearance β. Then, the plurality of rolling elements may be gathered in a portion of the rolling path R1 in the range Ar2 with a large clearance β to be brought into the ball clearance reduction state in which adjacent rolling elements contact each other.

In this event, the rolling balls 24 are moved while contacting each other also in the deflector passage 61, and therefore the ball clearance reduction state in the rolling path R1 cannot be resolved. In addition, the rolling balls 24 (rolling elements) are supplied from the deflector passage 61 into the rolling path R1 while contacting each other, and therefore the state in which the rolling balls 24 contact each other is reproduced. Further, the rolling balls 24 are not easily moved and not easily gathered in a portion on the side with a small clearance, and thus congestion of the rolling balls 24 in the ball clearance reduction state in a portion on the side with a large clearance cannot be resolved.

In the present embodiment, however, when the steering angle is in the neutral state, both end portions 61a and 62a of the deflector passage 61 are disposed at positions set in advance by the method discussed above. That is, at the steering neutral position N, the deflector passage 61 is formed such that both end portions 61a and 62a thereof are in the semiperimeter range Ar1 (see FIGS. 3, 8, and 9) of the inner peripheral surface (inner peripheral rolling groove 21a) of the rolling element nut 21. As discussed above, the range Ar1 is a semiperimeter range on the side with a small clearance β (distance) between the inner peripheral rolling groove 21a and the outer peripheral rolling groove 23 which form the rolling path R1.

In this case, the deflector passage 61 is not affected by the size of the clearance β between the inner peripheral rolling groove 21a and the outer peripheral rolling groove 23, and always has a constant diameter. Consequently, the rolling balls 24 are moved while being pushed by the following rolling balls 24 without being affected by the clearance between the inner peripheral rolling groove 21a and the outer peripheral rolling groove 23 in the deflector passage 61.

Thus, a region of the range Ar1 in which the rolling balls 24 (rolling elements) are affected by the clearance β between the inner peripheral rolling groove 21a and the outer peripheral rolling groove 23 being small can be reduced by an amount corresponding to the presence of the deflector passage 61. Consequently, the number of rolling balls 24 (rolling elements) in the rolling path R1 of the ball screw device 40 to be pushed out from the range Ar1 with a small clearance β toward the range Ar2 with a large clearance β can be suppressed. In addition, the rolling balls 24 (rolling elements) flow into the deflector passage 61 while being separated from each other. Therefore, the rolling balls 24 are intermittently supplied from the deflector passage 61 to the rolling path R1, forming a clearance between the rolling balls 24 to provide a trigger for resolving the ball clearance reduction state.

Further, at the steering neutral position N, as illustrated in FIG. 9, both end portions 61a and 62a of the deflector passage 61 are disposed away from the crossing line L1 that is the farther from the drive pulley 36 by E degrees in the circumferential direction and symmetrically in the right-left direction when the rolling element nut 21 is seen in the axial direction. Particularly, both end portions 61a and 62a of the deflector passage 61 are disposed symmetrically in the right-left direction (on both sides in the circumferential direction) with respect to the position of the crossing line L1 at which the clearance β (of the rolling path R1) between the inner peripheral rolling groove 21a and the outer peripheral rolling groove 23 is smallest (clearance β1).

That is, a part of the range Ar1 with a smallest clearance is replaced with the deflector passage 61. Consequently, the number of rolling balls 24, which have been positioned in the portion of the rolling path R1 with a small clearance, to be pushed out and moved toward the portion of the rolling path R1 in the range Ar2 with a large clearance by relative rotation between the inner peripheral rolling groove 21a and the outer peripheral rolling groove 23 can be suppressed efficiently even if the ball screw device 40 is actuated at the steering neutral position N. In addition, the rolling balls 24 are easily movable from the portion on the side with a large clearance β toward the portion on the side with a small clearance β. Thus, in the case where the portion on the side with a large clearance β is congested with the rolling balls 24 (rolling elements), such congestion can be relaxed effectively.

In the steering system 10 for a vehicle according to the embodiment described above, the position of the housing 11 relative to the steered shaft 20 with the vehicle in the straight travel state is defined as the steering neutral position N of the steered shaft 20. The deflector passage 61 is formed such that both end portions 61a and 62a thereof, which are respectively connected to the first opening 71 and the second opening 72 of the rolling path R1, are in the semiperimeter range Ar1 of the inner peripheral surface of the rolling element nut 21 with the steered shaft 20 at the steering neutral position N. The semiperimeter range Ar1 is a range formed to extend to a phase of 90° on both sides in the circumferential direction of the inner peripheral surface of the rolling element nut 21 from the crossing line L1 that is the farther from the drive pulley 36, of the crossing lines L1 and L2 formed with the virtual plane Q that includes the respective rotational axes C1 and C2 of the driven pulley 34 and the drive pulley 36 intersecting the inner peripheral surface.

In this manner, the clearance β between the inner peripheral rolling groove 21a of the rolling element nut 21 and the outer peripheral rolling groove 23 is non-uniform in the circumferential direction with the driven pulley 34 and the rolling element nut 21 pulled toward the drive pulley 36 by the tension T of the belt 35, and both end portions 61a and 62a of the deflector passage 61 are disposed in the (semiperimeter) range Ar1 on the side with a small clearance β. In this event, the deflector passage 61 is not affected by the size of the clearance between the inner peripheral rolling groove 21a and the outer peripheral rolling groove 23, and always has a constant diameter. Therefore, the range in which the clearance is substantially small, in the range Ar1 on the side with a small clearance, can be reduced by an amount corresponding to the range between both end portions 61a and 62a of the deflector passage 61.

Thus, the number of rolling balls 24 (rolling elements) between the inner peripheral rolling groove 21a and the outer peripheral rolling groove 23 to be pushed out from the portion on the side with a small clearance toward the portion on the side with a large clearance can be suppressed effectively. Therefore, occurrence of ball clearance reduction of the rolling balls 24 (rolling elements) is suppressed even if the rolling element nut 21 is relatively rotated with the driver operating the steering wheel 12 in the case where the steering angle of the steering wheel 12 is in the neutral state. In addition, the rolling elements are easily movable from the portion on the side with a large clearance toward the portion on the side with a small clearance. Thus, in the case where the portion on the side with a large clearance is congested with the rolling elements, such congestion can be relaxed effectively. Consequently, an increase in steering torque required for steering can be suppressed, and there is little possibility that the driver feels that the steering torque has been increased. There is also little possibility that a load on the motor M which rotates the rolling element nut is increased and power consumption is increased.

In the embodiment described above, in addition, the deflector passage 61 includes the first passage 51a which is connected to the first opening 71, the second passage 52a which is connected to the second opening 72, and the center passage 43 which connects the first passage 51a and the second passage 52a to each other. The first passage 51a and the second passage 52a are respectively formed in the deflectors 51 and 52 which are respectively housed in the two attachment holes 41 and 42 which are spaced from each other in the axial direction and penetrate the rolling element nut 21 between the outer peripheral surface and the inner peripheral surface. In addition, the center passage 43 is formed in the outer peripheral surface of the rolling element nut 21 to extend in a direction with a component in the axial direction such that the two attachment holes 41 and 42 on the side of the outer peripheral surface of the rolling element nut 21 communicate with each other. In this manner, the deflector passage 61 is formed from the pair of deflectors 51 and 52, which are formed compactly, and the center passage 43, which is formed in the rolling element nut 21, and thus can be manufactured at a low cost.

In the embodiment described above, in addition, both end portions 61a and 62a of the deflector passage 61 are disposed symmetrically in the right-left direction in the circumferential direction with respect to the crossing line L1, as the center, that is the farther from the drive pulley 36 when the rolling element nut 21 is seen in the axial direction with the steered shaft 20 at the steering neutral position N. In this manner, the deflector passage 61 is disposed in a well-balanced manner in the circumferential direction for a portion of the rolling path R1 at which the clearance β is smallest and from which the rolling balls 24 are pushed out most strongly toward a portion with a large clearance. Therefore, even if the driver operates the steering wheel 12 (steering shaft 13) in the right-left direction, the number (quantity) of rolling balls 24 in the portion of the rolling path R1 with a smallest clearance β to be pushed out by the operation and moved toward the portion of the rolling path R1 with a large clearance β can be suppressed effectively. Thus, ball clearance reduction of the rolling balls 24 (rolling elements) in the portion of the rolling path R1 with a large clearance β can be suppressed effectively.

In the embodiment described above, the deflector portion 60 is formed from the deflectors 51 and 52 and a part of the rolling element nut 21. However, the present invention is not limited to this aspect. The deflector portion may be formed integrally as with the circulation member 15 disclosed in JP 2011-256901 A.

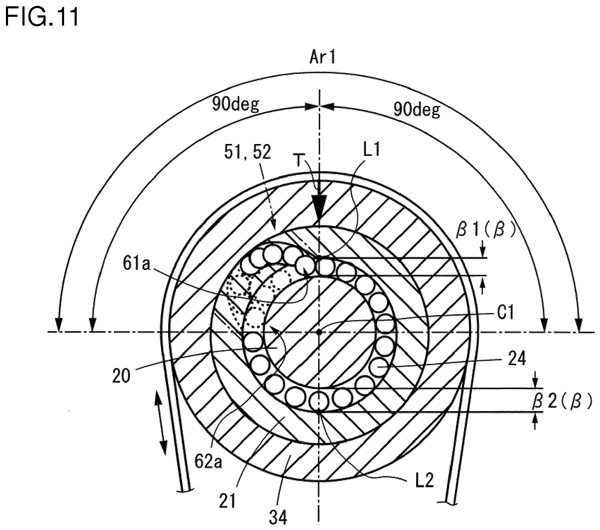

In the embodiment described above, in addition, both end portions 61a and 62a of the deflector passage 61 are disposed symmetrically in the right-left direction (on both sides in the circumferential direction) with respect to the position of the crossing line L1 in the inner peripheral rolling groove 21a, at which the clearance β (of the rolling path R1) between the inner peripheral rolling groove 21a and the outer peripheral rolling groove 23 is smallest (clearance β1), when the rolling element nut 21 is seen in the axial direction. However, the present invention is not limited to this aspect. Both end portions 61a and 62a may be disposed in any manner as long as both end portions 61a and 62a are disposed in the range Ar1. For example, as illustrated in relation to a first modification (see FIG. 11), both end portions 61a and 62a may be disposed in a region on the left side with respect to the crossing line L1.

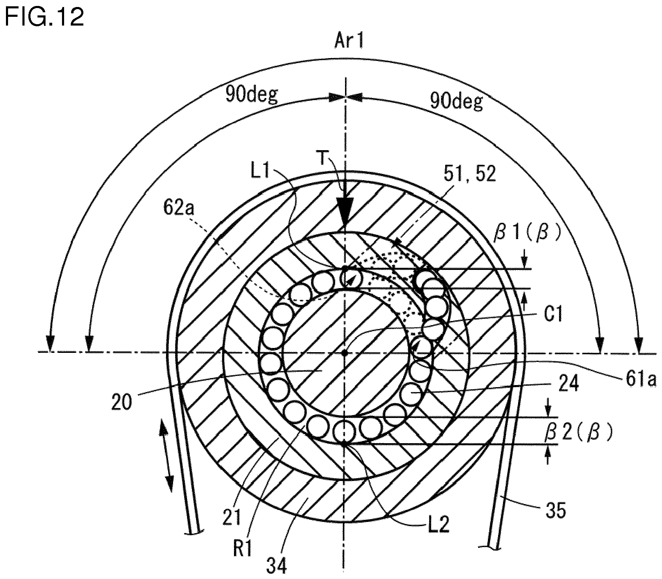

In addition, as illustrated in relation to a second modification (see FIG. 12), both end portions 61a and 62a may be disposed in a region on the right side with respect to the crossing line L1. Also with such a configuration, an equivalent effect can be expected. In addition, although not illustrated, both end portions 61a and 62a of the deflector passage 61 may be disposed on both sides in the circumferential direction asymmetrically in the right-left direction with respect to the position of the crossing line L1 at the center.

## Claims

1. A steering system for a vehicle, comprising:
a steered shaft supported on a housing so as to be movable in an axial direction and moved in the axial direction in accordance with a steering angle of a steering wheel to steer steered wheels;
a ball screw device that includes an outer peripheral rolling groove formed in an outer peripheral surface of the steered shaft, a rolling element nut, in an inner peripheral surface of which an inner peripheral rolling groove corresponding to the outer peripheral rolling groove is formed to form a rolling path wound spirally a plurality of times between the inner peripheral rolling groove and the outer peripheral rolling groove, a plurality of rolling elements housed in the rolling path, and a deflector portion in which a deflector passage is formed, the deflector passage being provided in the rolling element nut and communicating with the rolling path such that a first opening and a second opening that form respective ends of the rolling path are connected to form an endless circulation path together with the rolling path, enabling endless circulation of the rolling elements in the circulation path;
a motor that is fixed to the housing and that includes an output shaft offset from the steered shaft; and
a drive force transfer mechanism that includes a drive pulley provided so as to be rotatable together with the output shaft, a driven pulley provided so as to be rotatable together with the rolling element nut, and a belt wound between the drive pulley and the driven pulley with tension to transfer a rotational drive force of the motor, wherein:
a position of the steered shaft relative to the housing with the vehicle in a straight travel state is defined as a steering neutral position of the steered shaft;
the deflector passage is formed such that respective end portions of the deflector passage, which are connected to the first opening and the second opening of the rolling path, are in a semiperimeter range of the inner peripheral surface of the rolling element nut with the steered shaft at the steering neutral position; and
the semiperimeter range is a range formed to extend to a phase of 90° on both sides in a circumferential direction of the inner peripheral surface of the rolling element nut from a crossing line that is the farther from the drive pulley, of crossing lines formed with a virtual plane that includes a rotational axis of the driven pulley and a rotational axis of the drive pulley intersecting the inner peripheral surface with the steered shaft at the steering neutral position.

2. The steering system according to claim 1, wherein:
the deflector passage includes
a first passage connected to the first opening,
a second passage connected to the second opening, and
a center passage that connects the first passage and the second passage to each other;
the first passage and the second passage are respectively formed in deflectors respectively housed in two attachment holes spaced from each other in the axial direction and penetrating the rolling element nut between an outer peripheral surface of the rolling element nut and the inner peripheral surface; and
the center passage is formed in the outer peripheral surface of the rolling element nut to extend in a direction with a component in the axial direction such that the two attachment holes communicate with each other.

3. The steering system according to claim 1 or 2, wherein
the respective end portions of the deflector passage are disposed symmetrically in a right-left direction in the circumferential direction with respect to the crossing line, as a center, that is the farther from the drive pulley when the rolling element nut is seen in the axial direction with the steered shaft at the steering neutral position.
